# EUROPEAN PATENT APPLICATION

(11) **EP 4 106 253 A1**
(43) Date of publication of application: **21.12.2022**
(21) Application number: 21753649.9
(22) Date of filing: 10.02.2021
(51) Int. Cl.: H04L 5/00, H04L 1/06

(54) **CHANNEL STATE INFORMATION (CSI) REPORT FEEDBACK METHOD, TERMINAL DEVICE AND NETWORK DEVICE**

(30) Priority: 12.02.2020 CN 202010089624
(71) Applicant: Vivo Mobile Communication Co., Ltd., Dongguan, Guangdong 523863 (CN)
(72) Inventor: SONG, Yang, Dongguan, Guangdong 523863 (CN); SUN, Peng, Dongguan, Guangdong 523863 (CN)
(74) Representative: Raffay & Fleck
(86) International application number: PCT/CN2021/076444
(87) International publication number: WO 2021/160149

(57) **Abstract**

Disclosed in the present invention are a channel state information (CSI) report feedback method, a terminal device and a network device. Said method comprises: acquiring a CSI report configuration and one or more CSI measurement resource groups corresponding to the CSI report configuration, each CSI measurement resource group comprising one or more CSI measurement resources, each CSI measurement resource group comprising a channel measurement resource group and/or an interference measurement resource group, and each CSI measurement resource comprising a channel measurement resource and/or an interference measurement resource; generating a CSI report according to the CSI report configuration and the one or more CSI measurement resource groups; and reporting the CSI report.

## Description

### CROSS-REFERENCE TO RELATED APPLICATIONS

The present invention claims priority to Chinese Patent Application No. 202010089624.0, filed with the China National Intellectual Property Administration on February 12, 2020 and entitled "CHANNEL STATE INFORMATION CSI REPORT FEEDBACK METHOD, TERMINAL DEVICE AND NETWORK DEVICE", which is incorporated herein by reference in its entirety.

### TECHNICAL FIELD

The present invention relates to the communications field, and in particular, to a channel state information (Channel State Information, CSI) report feedback method, a terminal device, and a network device.

### BACKGROUND

When a network device communicates with a terminal device, a multi-transmission reception point/multi-panel (multi-TRP (Transmission Reception Point)/multi-panel) technology may be used to increase reliability and a throughput of transmission. For example, the terminal device may receive same data from a plurality of TRPs to increase transmission reliability, or the terminal device may receive different data from a plurality of TRPs to increase a transmission throughput.

Usually, in a multi-TRP/multi-panel scenario, a terminal device needs to measure CSI of a plurality of TRPs/a plurality of panels, and report a CSI report to a network device. Specifically, the network device may configure a CSI report configuration and a CSI resource configuration for the terminal device, and the terminal device may measure the CSI of the plurality of TRPs/the plurality of panels based on the CSI report configuration and the CSI resource configuration, and report the CSI report.

However, when the network device schedules a physical downlink shared channel (Physical Downlink Shared Channel, PDSCH) by using downlink control information (Downlink Control Information, DCI), considering an ideal backhaul (ideal backhaul) and a non-ideal backhaul (non-ideal backhaul) between the plurality of TRPs/the plurality of panels, the network device may schedule a plurality of PDSCHs by using a plurality of pieces of DCI, or may schedule a PDSCH by using one piece of DCI. In such different cases, there is still a lack of an effective implementation method for reporting the CSI report by the terminal device.

### SUMMARY

Embodiments of the present invention provide a CSI report feedback method, a terminal device, and a network device, to resolve a problem of how a terminal device effectively feeds back a CSI report in a multi-TRP/multi-panel scenario.

To resolve the foregoing technical problem, the present invention is implemented as follows:
According to a first aspect, a channel state information CSI report feedback method is provided, applied to a terminal device and including: obtaining a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; generating a CSI report based on the CSI report configuration and the one or more CSI measurement resource groups; and reporting the CSI report.

According to a second aspect, a CSI report feedback method is provided, applied to a network device and including: transmitting, to a terminal device, a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; and receiving a CSI report from the terminal device, where the CSI report is determined by the terminal device based on the CSI report configuration and the one or more CSI measurement resource groups.

According to a third aspect, a terminal device is provided. The terminal device includes: an obtaining module, configured to obtain a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; a generation module, configured to generate a CSI report based on the CSI report configuration and the one or more CSI measurement resource groups; and a reporting module, configured to report the CSI report.

According to a fourth aspect, a network device is provided. The network device includes: a transmitting module, configured to transmit, to a terminal device, a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; and a receiving module, configured to receive a CSI report from the terminal device, where the CSI report is determined by the terminal device based on the CSI report configuration and the one or more CSI measurement resource groups.

According to a fifth aspect, a network device is provided. The terminal device includes a processor, a memory, and a computer program that is stored in the memory and capable of running on the processor, and when the computer program is executed by the processor, the steps of the method according to the first aspect are implemented.

According to a sixth aspect, a terminal device is provided. The network device includes a processor, a memory, and a computer program that is stored in the memory and capable of running on the processor, and when the computer program is executed by the processor, the steps of the method according to the second aspect are implemented.

According to a seventh aspect, a computer-readable storage medium is provided. The computer-readable storage medium stores a computer program, and when the computer program is executed by a processor, the steps of the method according to the first aspect are implemented.

According to an eighth aspect, a computer-readable storage medium is provided. The computer-readable storage medium stores a computer program, and when the computer program is executed by a processor, the steps of the method according to the second aspect are implemented.

In the embodiments of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

### BRIEF DESCRIPTION OF DRAWINGS

FIG. 1 is a schematic flowchart of a channel state information CSI report feedback method according to an embodiment of the present invention;
FIG. 2 is a schematic flowchart of a CSI report feedback method according to an embodiment of the present invention;
FIG. 3 is a schematic structural diagram of a terminal device according to an embodiment of the present invention;
FIG. 4 is a schematic structural diagram of a network device according to an embodiment of the present invention;
FIG. 5 is a schematic structural diagram of a terminal device according to an embodiment of the present invention; and
FIG. 6 is a schematic structural diagram of a network device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, for example, a long term evolution (Long Term Evolution, LTE)/long term evolution-advanced (Long Term Evolution Advanced, LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, or a 5G system, which is also referred to as a new radio (New Radio, NR) system.

A terminal device may be understood as user equipment (User Equipment, UE), also referred to as a mobile terminal (Mobile Terminal), mobile user equipment, or the like, and may communicate with one or more core networks via a radio access network (for example, Radio Access Network, RAN). The terminal device may be a mobile terminal, for example, a mobile phone (or referred to as a "cellular" phone) or a computer with a mobile terminal. For example, the terminal device may be a portable, pocket-sized, handheld, computer built-in, or in-vehicle mobile apparatus; or may be a flying device such as a drone or an aircraft, which exchanges data with the radio access network.

A network device may be understood as a core network, or may be understood as a base station or a TRP. The base station may be a base transceiver station (Base Transceiver Station, BTS) in a GSM or CDMA; or may be a NodeB (NodeB) in WCDMA; or may be an evolved NodeB (evolutional NodeB, eNB or e-NodeB), a 5G NodeB (gNB), or a TRP in LTE, or a network-side device in a future evolved communications system. This is not limited in the present invention. However, for ease of description, the following embodiments are described by using the gNB as an example.

An application scenario of the embodiments of the present invention may be a scenario in which a network device communicates with a terminal device based on a multi-transmission reception point/multi-antenna panel (multi-TRP (Transmission Reception Point)/multi-panel) technology. Multi-TRP may be used as an example for description below.

The technical solutions provided in the embodiments of the present invention are described in detail below with reference to the accompanying drawings.

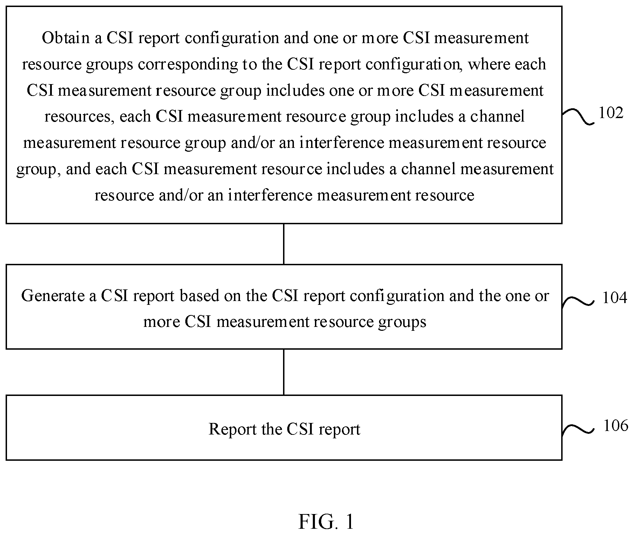

FIG. 1 is a schematic flowchart of a CSI report feedback method according to an embodiment of the present invention. The method may be performed by an electronic device, for example, a terminal device. In other words, the method may be performed by software or hardware installed on the terminal device. As shown in FIG. 1, the method may include the following steps.

S102: Obtain a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource.

In S102, before performing resource scheduling for the terminal device based on a multi-TRP technology, a network device may configure, for the terminal device, a CSI report configuration of a plurality of TRPs and one or more CSI measurement resource groups corresponding to the CSI report configuration (CSI report setting/CSI-ReportConfig), so that the terminal device may measure CSI of the plurality of TRPs based on the CSI report configuration and the one or more CSI measurement resource groups, and report a CSI report to the network device.

After configuring the CSI report configuration and the corresponding one or more CSI measurement resource groups, the network device may transmit the CSI report configuration and the corresponding one or more CSI measurement resource groups to the terminal device by using higher layer signaling or physical layer signaling. In this case, the terminal device may obtain the CSI report configuration and the one or more CSI measurement resource groups from the network device. The higher layer signaling may be radio resource control (Radio Resource Control, RRC) signaling or medium access control-control element (Medium Access Control-Control Element, MAC-CE) signaling. The physical layer signaling may be DCI or the like.

In this embodiment of the present invention, the one or more CSI measurement resource groups may be used by the terminal device to measure CSI, and each CSI measurement resource group may include at least one of a channel measurement resource group and an interference measurement resource group. A CSI measurement resource group may include one or more CSI measurement resources. A CSI measurement resource may specifically include at least one of a channel measurement resource (for example, a channel state information-reference signal (Channel State Information-Reference Signal, CSI-RS) resource) and an interference measurement resource (for example, a channel state information-interference measurement (Channel State Information-Interference Measurement, CSI-IM) resource).

Optionally, for the plurality of CSI measurement resource groups, different CSI measurement resource groups may have different quasi-colocations (Quasi-Colocation, QCL), and different CRS measurement resource groups may correspond to different TRPs. In this embodiment of the present invention, a correspondence between a plurality of CSI measurement resource groups and a plurality of TRPs (to be specific, a specific CSI measurement resource group belonging to a TRP) is determined by the network device. The network device may notify the terminal device of the correspondence by using a higher layer signaling configuration (for example, RRC signaling or DCI) or in a default manner, or the terminal device may not need to be notified, in other words, the correspondence is transparent to the terminal device. For example, there are M (M is an integer greater than 1) CSI measurement resource groups that respectively correspond to M TRPs. The network device may configure a quantity of CSI measurement resources in each CSI measurement resource group or configure an ID of a CSI resource in each CSI measurement resource group by using higher layer signaling.

In this embodiment of the present invention, there may be at least the following three cases of the CSI measurement resource.

Case 1: A CSI measurement resource may be specifically a channel measurement resource, and the channel measurement resource may be specifically a CSI-RS resource or a synchronization signal block (Synchronisation signal block, SSB) resource.

To be specific, the one or more CSI measurement resource groups may be specifically one or more channel measurement resource groups, the one or more channel measurement resource groups may be specifically one or more CSI-RS resource groups or SSB resource groups, each CSI-RS resource group includes one or more CSI-RS resources, or each SSB resource group includes one or more SSB resources, and different CSI-RS resource groups and/or different SSB resource groups have different QCLs and correspond to different TRPs. CSI-RS resources or SSB resources of each CSI-RS resource group or SSB resource group may have a same QCL or different QCLs.

Case 2: A CSI measurement resource may be specifically an interference measurement resource, and the interference measurement resource may be specifically a CSI-IM resource.

To be specific, the one or more CSI measurement resource groups may be specifically one or more interference measurement resource groups, the one or more interference measurement resource groups may be specifically one or more CSI-IM resource groups, each CSI-IM resource group includes one or more CSI-IM resources, and different CSI-IM resource groups have different QCLs and correspond to different TRPs.

Case 3: The CSI measurement resource may be a channel measurement resource or an interference measurement resource. If the CSI measurement resource is a channel measurement resource, the channel measurement resource may be specifically part or all of CSI-RS ports in a CSI-RS resource. If the CSI measurement resource is an interference measurement resource, the interference measurement resource may also be specifically part or all of CSI-RS ports in a CSI-RS resource.

To be specific, the one or more CSI measurement resource groups may be one or more channel measurement resource groups, or may be one or more interference measurement resource groups, the one or more channel measurement resource groups/interference measurement resource groups may be specifically one or more CSI-RS port groups, each CSI-RS port group includes one or more CSI-RS ports in a CSI-RS resource, and different CSI-RS port groups have different QCLs and correspond to different TRPs.

In this embodiment of the present invention, when there are a plurality of CSI measurement resource groups, the plurality of CSI measurement resource groups may be configured by using one or more CSI resource configurations (CSI resource setting/CSI-ResourceConfig). Specifically, there are the following two manners.

Manner 1: The plurality of CSI measurement resource groups are configured by using one CSI resource configuration associated with the CSI report configuration. In other words, when the network device configures the CSI resource configuration for the terminal device, the CSI resource configuration may include the plurality of CSI measurement resource groups.

Manner 2: The plurality of CSI measurement resource groups are respectively configured by using a CSI resource configuration associated with the CSI report configuration and a CSI resource configuration associated with another CSI report configuration.

There is an association relationship between the CSI report configuration and the another CSI report configuration, and the association relationship may be configured or indicated by the network device, for example, may be configured or indicated by the network device by using RRC signaling, MAC CE, or DCI.

In Manner 2, the network device may configure a CSI report configuration for each TRP, where each CSI report configuration may be associated with a CSI resource configuration; and configure or indicate an association relationship between at least two CSI report configurations, that is, associate a CSI report with one or more other CSI report configurations. In this way, at least two CSI resource configurations can be associated based on the association relationship between the at least two CSI report configurations, so that a plurality of CSI measurement resource groups corresponding to a CSI report configuration can be configured by using a CSI resource configuration associated with the CSI report configuration and a CSI resource configuration associated with another CSI resource configuration.

It should be noted that, in Manner 1, one CSI report configuration may be configured as a CSI report of a plurality of TRPs, and in Manner 2, one CSI report configuration may be configured as a CSI report of one TRP.

S104: Generate a CSI report based on the CSI report configuration and the one or more CSI measurement resource groups.

In S104, when generating the CSI report, the terminal device may select N CSI measurement resources from the one or more CSI measurement resource groups, and generate the CSI report based on the selected N CSI measurement resources, where N is an integer greater than 0 and less than or equal to M, and M is a quantity of the one or more CSI measurement resource groups.

In this embodiment of the present invention, the CSI report generated by the terminal device may include at least one of first CSI and second CSI. The first CSI may be understood as CSI obtained based on one CSI measurement resource, and the CSI measurement resource belongs to one of the one or more CSI measurement resource groups. To be specific, the terminal device selects a CSI measurement resource group from the one or more CSI measurement resource groups, selects one CSI measurement resource from the CSI resource group (namely, N = 1), and calculates the first CSI based on the CSI measurement resource.

It should be noted that, when the terminal device selects one CSI measurement resource from a CSI measurement resource group, in the case that the CSI measurement resource group includes one CSI measurement resource, the CSI measurement resource may be considered as the CSI measurement resource to be selected; or in the case that the CSI measurement resource group includes a plurality of CSI measurement resources, a CSI measurement resource with the best signal quality may be selected from the plurality of CSI measurement resources. The first CSI corresponds to CSI corresponding to a transmission mode in which only one TRP transmits data to the terminal device. For example, the transmission mode may be single-TRP transmission or dynamic transmission reception point selection (Dynamic Point Selection, DPS).

The second CSI may be understood as CSI obtained based on the N CSI measurement resources in the case that N is greater than 1. Optionally, the N CSI measurement resources may belong to the plurality of CSI measurement resource groups. To be specific, when selecting the N CSI measurement resources, the terminal device may select one or more CSI measurement resources from each CSI measurement resource group, provided that a total of N CSI measurement resources are finally selected. Alternatively, the N CSI measurement resources may respectively belong to N CSI measurement resource groups of the plurality of CSI measurement resource groups. To be specific, when selecting the N CSI measurement resources, the terminal device selects one CSI measurement resource from each of the N CSI measurement resource groups of the plurality of CSI measurement resource groups.

The second CSI corresponds to CSI corresponding to a case in which a plurality of TRPs transmit data to the terminal device. A corresponding transmission mode may be any of the following transmission modes: non-coherent joint transmission (Non-Coherent Joint Transmission, NCJT), single frequency network (Single Frequency Network, SFN), space division multiplexing (Space Division Multiplexing, SDM), frequency division multiplexing (Frequency Division Multiplexing, FDM), and time division multiplexing (Time Division Multiplexing, TDM).

The transmission mode of the second CSI may be indicated by the network device or pre-agreed upon by the network device and the terminal device. For example, a transmission mode currently used by the network device may be indicated to the terminal device (by using a higher layer signaling configuration, for example, carried in the CSI report configuration); or the network device and the terminal device may agree upon a transmission mode by using a protocol before the terminal device reports the CSI report.

In this embodiment of the present invention, the first CSI may be wideband CSI or subband CSI, where the subband CSI includes CSI of K subbands, the CSI of the K subbands includes a wideband CSI part and a K-subband CSI part, and K is an integer greater than or equal to 1. Similarly, the second CSI may also be wideband CSI or subband CSI, where the subband CSI includes CSI of K subbands, the CSI of the K subbands includes a wideband CSI part and a K-subband CSI part, and K is an integer greater than or equal to 1.

It should be noted that, to help the terminal device determine whether to report the first CSI or the second CSI, the network device may perform indication to the terminal device. Specifically, before transmitting the CSI report to the network device (or when the network device transmits the CSI report configuration and the corresponding one or more CSI measurement resource groups to the terminal device), the terminal device may receive indication information from the network device. The indication information may be used to indicate the terminal device to choose to report the first CSI or the second CSI. In other words, the terminal device may autonomously choose to report the first CSI or the second CSI. Alternatively, the indication information may be used to indicate a type of CSI included in the CSI report, and the CSI type may include any one of the following three types: the first CSI, the second CSI, and both the first CSI and the second CSI. In other words, the network device may indicate the terminal device to report the first CSI, the second CSI, or both the first CSI and the second CSI; or the terminal device autonomously selects a type of CSI to be reported.

Optionally, the indication information may be carried in higher layer signaling or physical layer signaling of the network device, for example, RRC signaling (for example, carried in the CSI report configuration), a MAC CE, or DCI.

The following describes in detail content in the CSI report generated by the terminal device in the case that the indication information is used to indicate different content.

In a first implementation, in the case that the indication information is used to indicate the terminal device to choose to report the first CSI or the second CSI, the CSI report may include CSI measurement resource information and CSI measurement resource indication information.

The CSI measurement resource information is used to indicate the N CSI measurement resources selected by the terminal device when calculating the CSI, where N is an integer greater than or equal to 2. In this embodiment of the present invention, the CSI measurement resource information may include CSI measurement resource group number information and/or number information of a CSI measurement resource in a CSI measurement resource group; or the CSI measurement resource information may include a CSI measurement resource or a CSI measurement resource number, and the CSI measurement resource or the CSI measurement resource number is used to determine the CSI measurement resource group number information and/or the number information of the CSI measurement resource in the CSI measurement resource group.

The CSI measurement resource group number information may be used to determine a group number of the CSI measurement resource group, and the number information of the CSI measurement resource in the CSI measurement resource group may be used to determine a specific CSI measurement resource in the CSI measurement resource group (on the premise that the CSI measurement resource group includes a plurality of CSI measurement resources).

Optionally, when a CSI measurement resource is a CSI-RS resource or a CSI-IM resource, the N pieces of CSI measurement resource information may be determined based on a CSI-RS resource group to which a CSI-RS resource indicator (CSI-RS Resource Indicator, CRI) in the CSI report belongs. The CSI-RS resource /CSI-IM resource may be determined based on the CSI-RS resource group/CSI-IM resource group to which the CRI belongs.

The CSI measurement resource indication information may be used to indicate P CSI measurement resources corresponding to the first CSI or the second CSI, where P is an integer greater than or equal to 1 and less than or equal to N, and the P CSI measurement resources belong to the N CSI measurement resources. Optionally, when N = 2, the CSI measurement resource indication information may be a bitmap (bitmap).

In the case that P is equal to 1, the CSI included in the CSI report is the first CSI; or in the case that P is greater than 1, the CSI included in the CSI report is the second CSI.

For example, the CSI measurement resource information is a CRI, the CSI measurement resource indication information is a bitmap, and N is equal to 2. The terminal device may report two CRIs and a bitmap, where the two CRIs are used to indicate two CSI measurement resources, and the bitmap is used to indicate one or two CRIs corresponding to the first CSI (wideband (1 bit) or subband (K bits)) or the second CSI (wideband (1 bit) or subband (K bits)). If there are K subbands, a K-bit bitmap is used, and the k^{th} bit corresponds to the k^{th} subband. If the k^{th} bit is "0", it indicates that CSI of the k^{th} subband corresponds to the 1^{st} or 2^{nd} CRI (namely, the first CSI) by default; or if the k^{th} bit is "1", it indicates that CSI of the k^{th} subband corresponds to the 1^{st} and 2^{nd} CRIs (namely, the second CSI).

In a second implementation, in the case that the indication information is used to indicate that the type of the CSI included in the CSI report is the first CSI, the CSI report may include CSI measurement resource information, where the CSI measurement resource information is used to indicate one CSI measurement resource, and the first CSI corresponds to the CSI measurement resource. In this case, it indicates that CSI on a wideband or all subbands corresponds to only one CSI measurement resource group.

Alternatively, the CSI report may include CSI measurement resource information and CSI measurement resource indication information. For the CSI measurement resource information, refer to the descriptions of the N pieces of CSI measurement resource information in the first implementation. Details are not described herein again. The CSI measurement resource information is used to indicate the N CSI measurement resources, the CSI measurement resource indication information is used to indicate one CSI measurement resource corresponding to the first CSI, and the CSI measurement resource belongs to the N CSI measurement resources. Optionally, when N = 2, the CSI measurement resource indication information may be a bitmap.

For example, the CSI measurement resource information is a CRI, the CSI measurement resource indication information is a bitmap, and N is equal to 2. The terminal device reports two CRIs (N = 2) and a bitmap, where the CRIs are used to indicate two CSI measurement resources, and the bitmap is used to indicate which CRI (namely, TRP) corresponds to the first CSI (wideband (1 bit) or subband (K bits)). If there are K subbands, a K-bit bitmap is used, and the k^{th} bit corresponds to the k^{th} subband. If the k^{th} bit is "0", it indicates that CSI of the k^{th} subband corresponds to the 1^{st} CRI; or if the k^{th} bit is " 1", it indicates that CSI of the k^{th} subband corresponds to the 2^{nd} CRI.

In a third implementation, in the case that the indication information is used to indicate that the type of the CSI included in the CSI report is the second CSI, the CSI report may include CSI measurement resource information, the CSI measurement resource information is used to indicate the N CSI measurement resources, and the second CSI corresponds to the N CSI measurement resources, where N is an integer greater than 1.

Alternatively, the CSI report may include CSI measurement resource information and CSI measurement resource indication information. The CSI measurement resource information is used to indicate the N CSI measurement resources, where N is an integer greater than or equal to 2. The CSI measurement resource indication information is used to indicate Q pieces of CSI measurement resource information corresponding to the second CSI, where Q is an integer greater than 1 and less than or equal to N, and the Q CSI measurement resources belong to the N CSI measurement resources. Optionally, when N = 2, the CSI measurement resource indication information may be a bitmap.

For example, the CSI measurement resource information is a CRI, the CSI measurement resource indication information is a bitmap, N is equal to 4, and Q is equal to 2. The terminal device reports four CRIs (N = 4) and a bitmap, where the CRIs are used to indicate four CSI measurement resources, and the bitmap is used to indicate which Q CRIs (namely, TRPs) correspond to the second CSI (a wideband or each subband). If there are K subbands, a 4-bit bitmap is used for each subband, and the n^{th} bit corresponds to the n^{th} CRI of N CRIs. If the n^{th} bit is "0", it indicates that CSI of the subband does not correspond to the n^{th} CRI; or if the n^{th} bit is "1", it indicates that CSI of the subband corresponds to the n^{th} CRI. Because Q is equal to 2, only two bits of the 4-bit bitmap on the subband may be " 1".

It should be noted that, in the case that the plurality of CSI measurement resource groups are respectively configured by using a CSI resource configuration associated with the CSI report configuration and a CSI resource configuration associated with another CSI report configuration, the CSI report may include N - 1 pieces of CSI measurement resource information, where the (N - 1) pieces of CSI measurement resource information correspond to the CSI resource configuration associated with the another CSI report configuration.

In a fourth implementation, in the case that the indication information is used to indicate that the type of the CSI included in the CSI report is the first CSI and the second CSI, there may be at least the following four cases of content included in the CSI report.

Case 1: The CSI report includes CSI measurement resource information and CSI measurement resource indication information. The CSI measurement resource information is used to indicate the N CSI measurement resources, and the second CSI corresponds to the N CSI measurement resources, where N is an integer greater than 1. The CSI measurement resource indication information is used to indicate one CSI measurement resource corresponding to the first CSI, and the CSI measurement resource belongs to the N CSI measurement resources.

For example, the CSI measurement resource information is a CRI, the CSI measurement resource indication information is a bitmap, and N is equal to 2. The terminal device reports two CRIs, where the second CSI corresponds to the two CRIs, and the first CSI corresponds to one of the CRIs. In addition, the terminal device further reports a bitmap, where the bitmap is used to indicate which CRI corresponds to the first CSI (wideband (1 bit) or subband (K bits)). Optionally, the first CSI may alternatively correspond to the 1^{st} or 2^{nd} CRI by default.

It should be noted that, in Case 1, a TRP corresponding to the first CSI is one of TRPs corresponding to the second CSI.

Case 2: The CSI report includes CSI measurement resource information, first CSI measurement resource indication information, and second CSI measurement resource indication information, where the CSI measurement resource information is used to indicate the N CSI measurement resources, N is an integer greater than 1, the first CSI measurement resource indication information is used to indicate one CSI measurement resource corresponding to the first CSI, the CSI measurement resource belongs to the N CSI measurement resources, the second CSI measurement resource indication information is used to indicate P CSI measurement resources corresponding to the second CSI, P is an integer greater than 1 and less than or equal to N, and the P CSI measurement resources belong to the N CSI measurement resources.

For example, the CSI measurement resource information is a CRI, the CSI measurement resource indication information is a bitmap, and N is equal to 2. The terminal device reports two CRIs, where the first CSI corresponds to one of the CRIs, and the second CSI corresponds to the two CRIs. In addition, the terminal device further reports a bitmap, where the bitmap is used to indicate which CRI corresponds to the first CSI (wideband or subband CSI).

Case 3: The CSI report includes first CSI measurement resource information, second CSI measurement resource information, first CSI measurement resource indication information, and second CSI measurement resource indication information. The first CSI measurement resource information is used to indicate N1 CSI measurement resources, the second CSI measurement resource information is used to indicate N2 CSI measurement resources, and the N1 CSI measurement resources and the N2 CSI measurement resources belong to the N CSI measurement resources, where N is an integer greater than 2, N1 is an integer greater than or equal to 1, and N2 is an integer greater than or equal to 2.

The first CSI measurement resource indication information is used to indicate one CSI measurement resource corresponding to the first CSI, and the CSI measurement resource belongs to the N1 CSI measurement resources. The second CSI measurement resource indication information is used to indicate B CSI measurement resources corresponding to the second CSI, where B is an integer greater than 1 and less than or equal to N2, and the B CSI measurement resources belong to the N2 CSI measurement resources.

It should be noted that a union of the indicated N1 CSI measurement resources and N2 CSI measurement resources is the N CSI measurement resources, in other words, the indicated N1 CSI measurement resources and N2 CSI measurement resources may include a same CSI measurement resource. In this case, a sum of N1 and N2 is greater than N. If the indicated N1 CSI measurement resources and N2 CSI measurement resources are different CSI measurement resources, the sum of N1 and N2 is equal to N.

Case 4: The CSI report includes first CSI measurement resource information, second CSI measurement resource information, and CSI measurement resource indication information. The first CSI measurement resource information is used to indicate one CSI measurement resource corresponding to the first CSI, and the CSI measurement resource belongs to the N CSI measurement resources, where N is an integer greater than 1.

The second CSI measurement resource information is used to indicate N3 CSI measurement resources, and the N3 CSI measurement resources belong to the N CSI measurement resources. The CSI measurement resource indication information is used to indicate B CSI measurement resources corresponding to the second CSI, where B is an integer greater than 1 and less than or equal to N3, and the B CSI measurement resources belong to the N3 CSI measurement resources.

It should be noted that a union of the indicated CSI measurement resource and N3 CSI measurement resources is the N CSI measurement resources, in other words, the indicated CSI measurement resource and N3 CSI measurement resources may include a same CSI measurement resource (the indicated CSI measurement resource belongs to the N3 CSI measurement resources). In this case, N3 is equal to N. If the indicated CSI measurement resource is different from the N3 CSI measurement resources, N3 is equal to N - 1.

In Case 3 and Case 4, the terminal device separately reports the CSI measurement resource information corresponding to the first CSI and the CSI measurement resource information corresponding to the second CSI.

For the foregoing four implementations, the terminal device may select one of the implementations based on a specific indication of the indication information, to generate a corresponding CSI report.

In this embodiment of the present invention, in the case that the terminal device reports the second CSI, the second CSI may include L rank indicators (Rank Indicator, RI) and P pieces of CSI, where L is an integer greater than or equal to 1 and less than or equal to N, and P is an integer greater than 1 and less than or equal to N. If the second CSI includes one RI (in other words, L is equal to 1), it indicates that an RI corresponding to the P pieces of CSI is one RI, or a sum of P RIs corresponding to the P pieces of CSI is equal to the one RI; or if the second CSI includes P RIs (in other words, L is equal to P), it indicates that the P pieces of CSI each correspond to one RI.

One of all P pieces of CSI is specifically part of CSI obtained based on P CSI measurement resources, and the part of the CSI may correspond to one of the P CSI measurement resources.

In this embodiment of the present invention, CSI may include at least one of wideband CSI and subband CSI, where the wideband CSI may include at least one of a wideband precoding matrix indicator (Precoding Matrix Indicator, PMI) and a wideband channel quality indicator (Channel Quality Indicator, CQI), the subband CSI may include at least one of a subband PMI and a subband CQI, the subband PMI includes a wideband PMI part and a K-subband PMI part, and the subband CQI includes a wideband CQI part and a K-subband CQI part.

Optionally, in this embodiment of the present invention, the terminal device may further report a CSI report to each TRP. In this case, the CSI report may include a piece of CSI measurement resource information or specific CSI measurement resource information, or not include CSI measurement resource information. The specific CSI measurement resource information may be used to indicate that the CSI report does not include target CSI, and the target CSI may be CSI corresponding to the CSI measurement resource information (correspondingly a piece of CSI measurement resource information is reported) or CSI of a CSI measurement resource group corresponding to a CSI resource configuration associated with the CSI report configuration (correspondingly CSI measurement resource information is not reported).

In addition, in the case that the CSI report includes one piece of CSI measurement resource information or does not include CSI measurement resource information, the CSI report may further indicate whether the target CSI is included. When indicating whether the target CSI is included, the terminal device may perform indication by using a bitmap.

For example, the CSI measurement resource information is a CRI. If there are K subbands, a K-bit bitmap is used, and the k^{th} bit corresponds to the k^{th} subband. If the k^{th} bit is "0", it indicates that the k^{th} subband does not include CSI corresponding to the CRI (when a CRI is reported), or does not include CSI corresponding to a CSI-RS resource (when no CRI is reported) associated with the CSI report configuration (in other words, the CSI does not correspond to the current TRP, which means that it is recommended that the terminal device not be scheduled by the current TRP). If the k^{th} bit is " 1", it indicates that the k^{th} subband includes CSI corresponding to the CRI (when a CRI is reported), or CSI corresponding to a CSI-RS resource (when no CRI is reported) associated with the CSI report configuration (the CSI may be second CSI corresponding to the current TRP or first CSI corresponding to the current TRP).

After generating the CSI report in S104, the terminal device may perform S106.

S106: Report the CSI report.

When reporting the CSI report in S106, the terminal device may perform reporting based on a configuration in the CSI report configuration.

For example, if periodic reporting of a CSI report by the terminal device is configured in the CSI report configuration, the terminal device may generate a periodic CSI (Periodic CSI, P-CSI) report, and transmit the CSI report on a physical uplink control channel (Physical Uplink Control Channel, PUCCH); if semi-persistent reporting of a CSI report by the terminal device is configured in the CSI report configuration, the terminal device may generate a semi-persistent CSI (Semi-persistent CSI, SP-CSI) report, and transmit the CSI report on a PUCCH or a physical uplink shared channel (Physical Uplink Shared Channel, PUSCH); or if aperiodic reporting of a CSI report by the terminal device is configured in the CSI report configuration, the terminal device may generate an aperiodic CSI (Aperiodic CSI, AP-CSI) report, and transmit the CSI report on a PUSCH.

In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

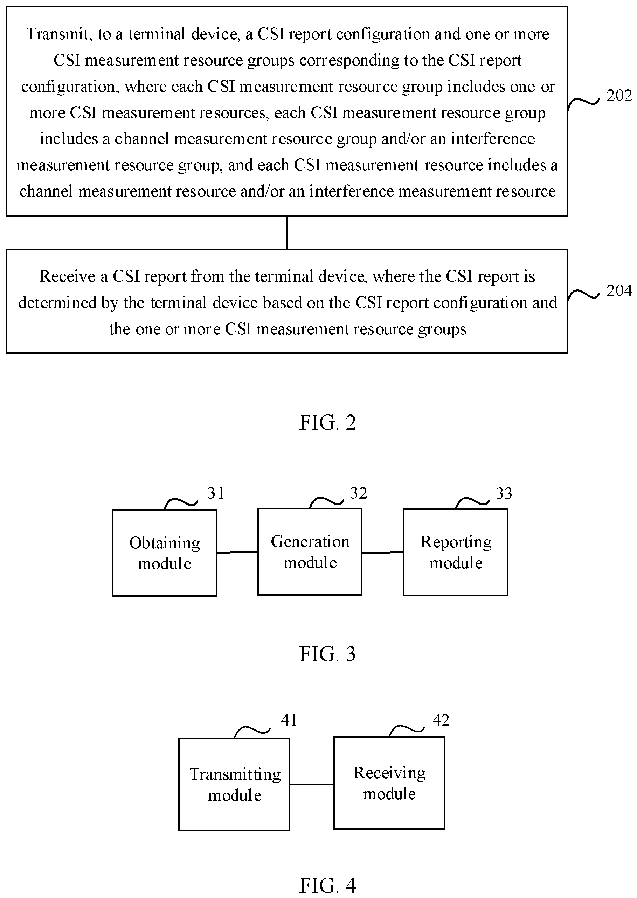

FIG. 2 is a schematic flowchart of a CSI report feedback method according to an embodiment of the present invention. The method may be performed by an electronic device, for example, a network device. In other words, the method may be performed by software or hardware installed on the network device. As shown in FIG. 2, the method may include the following steps.

S202: Transmit, to a terminal device, a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource.

In S202, before performing resource scheduling for the terminal device based on a multi-TRP technology, the network device may configure, for the terminal device, a CSI report configuration of a plurality of TRPs and one or more CSI measurement resource groups corresponding to the CSI report configuration, and transmit the CSI report configuration and the one or more CSI measurement resource groups to the terminal device. Each CSI measurement resource group includes one or more CSI measurement resources, each CSI measurement resource group includes a channel measurement resource group and/or an interference measurement resource group, and each CSI measurement resource includes a channel measurement resource and/or an interference measurement resource. Optionally, different CSI measurement resource groups may have different QCLs, and different CSI measurement resource groups correspond to different TRPs.

In this embodiment of the present invention, one CSI measurement resource includes one channel measurement resource, and the channel measurement resource includes a CSI-RS resource or an SSB resource group; or one CSI measurement resource includes one interference measurement resource, and the interference measurement resource includes a CSI-IM resource; or one CSI measurement resource includes one channel measurement resource or one interference measurement resource, and the channel measurement resource and the interference measurement resource include part or all of CSI-RS ports in a CSI-RS resource. For details, refer to the corresponding content described in the embodiment shown in FIG. 1. Details are not described herein again.

Optionally, in the case that there are a plurality of CSI measurement resource groups, the plurality of CSI measurement resource groups are configured by using one CSI resource configuration associated with the CSI report configuration; or the plurality of CSI measurement resource groups are respectively configured by using a CSI resource configuration associated with the CSI report configuration and a CSI resource configuration associated with another CSI report configuration, where there is an association relationship between the CSI report configuration and the another CSI report configuration, and the association relationship may be configured or indicated by the network device.

Specifically, in the case that the CSI report configuration corresponds to a plurality of CSI measurement resource groups, the network device configures or indicates the association relationship between the CSI report configuration and the another CSI report configuration when transmitting, to the terminal device, the CSI report configuration and the one or more CSI measurement resource groups corresponding to the CSI report configuration. The network device may perform configuration or indication by using RRC signaling, MAC CE, DCI, or the like.

In this embodiment of the present invention, after the network device transmits, to the terminal device, the CSI report configuration and the one or more CSI measurement resource groups corresponding to the CSI report configuration, the terminal device may generate a CSI report based on the CSI report configuration and the corresponding one or more CSI measurement resource groups. For a specific implementation, refer to the corresponding content in the embodiment shown in FIG. 1. Details are not described herein again.

The CSI report generated by the terminal device may include at least one of first CSI and second CSI. The first CSI is CSI obtained based on one CSI measurement resource, and the CSI measurement resource belongs to one of the one or more CSI measurement resource groups. The second CSI is CSI obtained based on N CSI measurement resources, where N is greater than 1, and the N CSI measurement resources belong to the plurality of CSI measurement resource groups, or the N CSI measurement resources respectively belong to N CSI measurement resource groups. After the terminal device generates the CSI report, to help the terminal device to report the CSI report, the network device may indicate CSI included in the CSI report.

Specifically, before receiving the CSI report from the terminal device, the network device may transmit indication information to the terminal device, where the indication information may be used to indicate the terminal device to choose to report the first CSI or the second CSI; or the indication information may be used to indicate a type of the CSI included in the CSI report, and the CSI type includes the first CSI, the second CSI, or both the first CSI and the second CSI.

In this way, the terminal device may generate a corresponding CSI report based on the indication of the network device. For details, refer to the corresponding content in the embodiment shown in FIG. 1. Details are not described herein again.

S204: Receive the CSI report from the terminal device, where the CSI report is determined by the terminal device based on the CSI report configuration and the one or more CSI measurement resource groups.

In S204, after generating the CSI report, the terminal device may feed back the CSI report to the network device. In the case that the network device transmits the indication information to the terminal device, the CSI report received by the network device may include at least one of CSI measurement resource information and CSI measurement resource indication information, where the CSI measurement resource information may be used to indicate the N CSI measurement resources, the CSI measurement resource indication information may be used to indicate a CSI measurement resource corresponding to the first CSI or the second CSI, and the CSI measurement resource indicated by the CSI measurement resource indication information belongs to the N CSI measurement resources. For details, refer to the content described in the embodiment shown in FIG. 1. Details are not described herein again.

Optionally, in the case that the terminal device feeds back a CSI report to each TRP, the CSI report received by the network device may include a piece of CSI measurement resource information or specific CSI measurement resource information, or not include CSI measurement resource information, where the specific CSI measurement resource information is used to indicate that the CSI report does not include target CSI. In the case that the CSI report includes one piece of CSI measurement resource information or does not include CSI measurement resource information, the CSI report further indicates whether the target CSI is included. The target CSI includes CSI corresponding to the one piece of CSI measurement resource information or CSI of a CSI measurement resource group corresponding to a CSI resource configuration associated with the CSI report configuration. For details, still refer to the content described in the embodiment shown in FIG. 1. Details are not described herein again.

After receiving the CSI report, the network device may determine one or more TRPs based on the CSI report, and perform resource scheduling based on the one or more TRPs. In the case that the CSI report includes at least one of the N pieces of CSI measurement resource information and the CSI measurement resource indication information, the network device may determine the one or more TRPs based on the at least one of the N pieces of CSI measurement resource information and the CSI measurement resource indication information; and after determining the one or more TRPs, may perform resource scheduling for the terminal device based on the one or more TRPs. When the network device performs resource scheduling for the terminal device based on one TRP, a transmission mode is DPS. When resource scheduling is performed based on a plurality of TRPs, a transmission mode may be NCJT, SFN, SDM, FDM, or TDM.

In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

The foregoing describes specific embodiments of this specification. Other embodiments fall within the scope of the appended claims. In some cases, the actions or steps described in the claims may be performed in an order different from that in the embodiments and a desired result can be still achieved. In addition, the processes depicted in the drawings do not necessarily require the shown specific order or sequential order to achieve the desired result. In some embodiments, multitasking and parallel processing may be possible or advantageous.

FIG. 3 is a schematic structural diagram of a terminal device according to an embodiment of the present invention. The terminal device includes an obtaining module 31, a generation module 32, and a reporting module 33. The obtaining module 31 obtains a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource. The generation module 32 generates a CSI report based on the CSI report configuration and the one or more CSI measurement resource groups. The reporting module 33 reports the CSI report.

Optionally, one CSI measurement resource includes one channel measurement resource, and the channel measurement resource includes a channel state information-reference signal CSI-RS resource or a synchronization signal block SSB resource; or one CSI measurement resource includes one interference measurement resource, and the interference measurement resource includes a channel state information-interference measurement CSI-IM resource; or one CSI measurement resource includes one channel measurement resource or one interference measurement resource, and the channel measurement resource and the interference measurement resource include part or all of CSI-RS ports in a CSI-RS resource.

Optionally, the plurality of CSI measurement resource groups are configured by using one CSI resource configuration associated with the CSI report configuration; or the plurality of CSI measurement resource groups are respectively configured by using a CSI resource configuration associated with the CSI report configuration and a CSI resource configuration associated with another CSI report configuration, and an association relationship between the CSI report configuration and the another CSI report configuration is configured or indicated by a network device.

Optionally, that the generation module 32 generates a CSI report based on the CSI report configuration and the one or more CSI measurement resource groups includes: selecting N CSI measurement resources from the one or more CSI measurement resource groups, where N is an integer greater than 0 and less than or equal to M, and M is a quantity of the plurality of CSI measurement resource groups; and generating the CSI report based on the N CSI measurement resources.

Optionally, the CSI report includes at least one of first CSI and second CSI. The first CSI is CSI obtained based on one CSI measurement resource, and the CSI measurement resource belongs to one of the one or more CSI measurement resource groups. The second CSI is CSI obtained based on the N CSI measurement resources, where N is greater than 1, and the N CSI measurement resources belong to the plurality of CSI measurement resource groups, or the N CSI measurement resources respectively belong to N CSI measurement resource groups.

Optionally, a transmission mode corresponding to the second CSI is any one of the following: non-coherent joint transmission NCJT, single frequency network SFN, space division multiplexing SDM, frequency division multiplexing FDM, and time division multiplexing TDM, where the transmission mode corresponding to the second CSI is indicated by the network device or pre-agreed upon by the network device and the terminal device.

Optionally, before the reporting module 33 reports the CSI report, the obtaining module 31 receives indication information from the network device, where the indication information is used to indicate the terminal device to choose to report the first CSI or the second CSI; or the indication information is used to indicate a type of CSI included in the CSI report, and the CSI type includes the first CSI, the second CSI, or both the first CSI and the second CSI.

Optionally, in the case that the indication information is used to indicate the terminal device to choose to report the first CSI or the second CSI, the CSI report includes CSI measurement resource information and CSI measurement resource indication information, where the CSI measurement resource information is used to indicate the N CSI measurement resources, the CSI measurement resource indication information is used to indicate P CSI measurement resources corresponding to the first CSI or the second CSI, the P CSI measurement resources belong to the N CSI measurement resources, P is an integer greater than or equal to 1 and less than or equal to N, and N is an integer greater than or equal to 2. When P is equal to 1, the CSI report includes the first CSI; or when P is greater than 1, the CSI report includes the second CSI.

Optionally, in the case that the indication information is used to indicate that the type of the CSI included in the CSI report is the first CSI, the CSI report includes CSI measurement resource information, where the CSI measurement resource information is used to indicate one CSI measurement resource, and the first CSI corresponds to the CSI measurement resource. Alternatively, the CSI report includes CSI measurement resource information and CSI measurement resource indication information, where the CSI measurement resource information is used to indicate the N CSI measurement resources, the CSI measurement resource indication information is used to indicate one CSI measurement resource corresponding to the first CSI, and the CSI measurement resource belongs to the N CSI measurement resources.

Optionally, in the case that the indication information is used to indicate that the type of the CSI included in the CSI report is the second CSI, the CSI report includes CSI measurement resource information, where the CSI measurement resource information is used to indicate the N CSI measurement resources, and the second CSI corresponds to the N CSI measurement resources. Alternatively, the CSI report includes CSI measurement resource information and CSI measurement resource indication information, where the CSI measurement resource information is used to indicate the N CSI measurement resources, the CSI measurement resource indication information is used to indicate Q CSI measurement resources corresponding to the second CSI, the Q CSI measurement resources belong to the N CSI measurement resources, Q is an integer greater than 1 and less than or equal to N, and N is an integer greater than or equal to 2.

Optionally, in the case that the indication information is used to indicate that the type of the CSI included in the CSI report is the first CSI and the second CSI, the CSI report includes CSI measurement resource information and CSI measurement resource indication information, where the CSI measurement resource information is used to indicate the N CSI measurement resources, the second CSI corresponds to the N CSI measurement resources, the CSI measurement resource indication information is used to indicate one CSI measurement resource corresponding to the first CSI, and the CSI measurement resource belongs to the N CSI measurement resources.

Alternatively, the CSI report includes the CSI measurement resource information, first CSI measurement resource indication information, and second CSI measurement resource indication information, where the first CSI measurement resource indication information is used to indicate one CSI measurement resource corresponding to the first CSI, the second CSI measurement resource indication information is used to indicate P CSI measurement resources corresponding to the second CSI, the CSI measurement resource and the P CSI measurement resources belong to the N CSI measurement resources, and P is an integer greater than 1 and less than or equal to N.

Alternatively, the CSI report includes first CSI measurement resource information, second CSI measurement resource information, first CSI measurement resource indication information, and second CSI measurement resource indication information, where the first CSI measurement resource information is used to indicate N1 CSI measurement resources, the second CSI measurement resource information is used to indicate N2 CSI measurement resources, the first CSI measurement resource indication information is used to indicate one CSI measurement resource corresponding to the first CSI, the second CSI measurement resource indication information is used to indicate B CSI measurement resources corresponding to the second CSI, the CSI measurement resource belongs to the N1 CSI measurement resources, the B CSI measurement resources belong to the N2 CSI measurement resources, the N1 CSI measurement resources and the N2 CSI measurement resources belong to the N CSI measurement resources, a union of the N1 CSI measurement resources and the N2 CSI measurement resources is the N CSI measurement resources, N1 is an integer greater than or equal to 1, N2 is an integer greater than or equal to 2, and B is an integer greater than 1 and less than or equal to N2.

Alternatively, the CSI report includes first CSI measurement resource information, second CSI measurement resource information, and CSI measurement resource indication information, where the first CSI measurement resource information is used to indicate one CSI measurement resource corresponding to the first CSI, the second CSI measurement resource information is used to indicate N3 CSI measurement resources, the CSI measurement resource indication information is used to indicate B CSI measurement resources corresponding to the second CSI, N3 is an integer greater than 1, the B CSI measurement resources belong to the N3 CSI measurement resources, a union of the one CSI measurement resource and the N3 CSI measurement resources is the N CSI measurement resources, and B is an integer greater than 1 and less than or equal to N3.

Optionally, the second CSI includes L rank indicators RIs and P pieces of CSI, one of the P pieces of CSI is part of CSI obtained based on P CSI measurement resources, the part of the CSI corresponds to one of the P CSI measurement resources, L is an integer greater than or equal to 1 and less than or equal to N, and P is an integer greater than 1 and less than or equal to N. When L is equal to 1, an RI corresponding to the P pieces of CSI is one RI, or a sum of P RIs corresponding to the P pieces of CSI is equal to the one RI; or when L is equal to P, the P pieces of CSI each correspond to one RI. The one piece of CSI includes at least one of the following: wideband CSI, where the wideband CSI includes at least one of a wideband precoding matrix indicator PMI and a wideband channel quality indicator CQI; and subband CSI, where the subband CSI includes at least one of a subband PMI and a subband CQI, the subband PMI includes a wideband PMI part and a K-subband PMI part, and the subband CQI includes a wideband CQI part and a K-subband CQI part.

Optionally, the CSI report includes a piece of CSI measurement resource information or specific CSI measurement resource information, or does not include CSI measurement resource information. The specific CSI measurement resource information is used to indicate that the CSI report does not include target CSI. In the case that the CSI report includes one piece of CSI measurement resource information or does not include CSI measurement resource information, the CSI report further indicates whether the target CSI is included, and the target CSI includes CSI corresponding to the one piece of CSI measurement resource information or CSI of a CSI measurement resource group corresponding to a CSI resource configuration associated with the CSI report configuration.

Optionally, the CSI measurement resource information includes CSI measurement resource group number information and/or number information of a CSI measurement resource in a CSI measurement resource group; or the CSI measurement resource information includes a CSI measurement resource or a CSI measurement resource number, and the CSI measurement resource or the CSI measurement resource number is used to determine the CSI measurement resource group number information and/or the number information of the CSI measurement resource in the CSI measurement resource group.

Optionally, when the CSI measurement resource is a CSI-RS resource or a CSI-IM resource, the N pieces of CSI measurement resource information are determined based on a CSI-RS resource indicator CRI in the CSI report.

The terminal device provided in this embodiment of the present invention is capable of implementing the processes implemented by the terminal device in the method embodiment of FIG. 1. To avoid repetition, details are not described herein again. In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

FIG. 4 is a schematic structural diagram of a network device according to an embodiment of the present invention. The network device includes a transmitting module 41 and a receiving module 42. The transmitting module 41 transmits, to a terminal device, a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource. The receiving module 42 receives a CSI report from the terminal device, where the CSI report is determined by the terminal device based on the CSI report configuration and the one or more CSI measurement resource groups.

Optionally, the network device further includes a configuration module 43. When the transmitting module 41 transmits, to the terminal device, the CSI report configuration and the one or more CSI measurement resource groups corresponding to the CSI report configuration, in the case that the plurality of CSI measurement resource groups are respectively configured by using a CSI resource configuration associated with the CSI report configuration and a CSI resource configuration associated with another CSI report configuration, the configuration module 43 configures or indicates an association relationship between the CSI report configuration and the another CSI report configuration.

Optionally, before the receiving module 42 receives the CSI report from the terminal device, the transmitting module 41 transmits indication information to the terminal device, where the indication information is used to indicate the terminal device to choose to report first CSI or second CSI; or the indication information is used to indicate a type of CSI included in the CSI report, and the CSI type includes the first CSI, the second CSI, or both the first CSI and the second CSI.

Optionally, the CSI report includes at least one of CSI measurement resource information and CSI measurement resource indication information, where the CSI measurement resource information is used to indicate N CSI measurement resources, and the CSI measurement resource indication information is used to indicate a CSI measurement resource corresponding to the first CSI or the second CSI. After receiving the CSI report from the terminal device, the receiving module 42 determines one or more transmission reception points TRPs based on the at least one of the CSI measurement resource information and the CSI measurement resource indication information; and performs resource scheduling for the terminal device based on the one or more TRPs.

The network device provided in this embodiment of the present invention is capable of implementing the processes implemented by the network device in the method embodiment of FIG. 2. To avoid repetition, details are not described herein again. In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

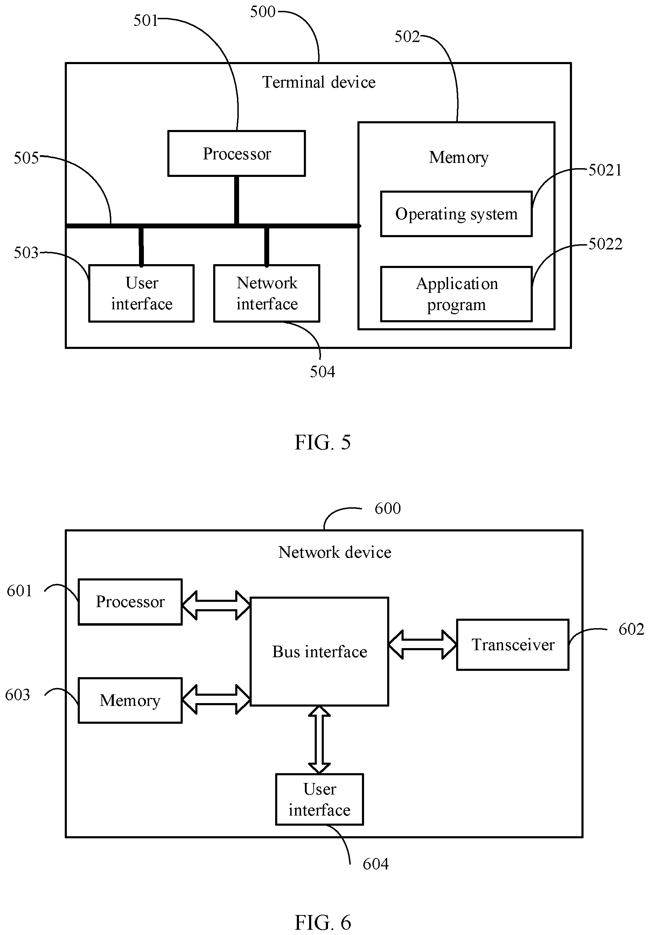

FIG. 5 is a schematic structural diagram of a terminal device according to an embodiment of the present invention. The terminal device 500 shown in FIG. 5 includes at least one processor 501, a memory 502, at least one network interface 504, and a user interface 503. The various components in the terminal device 500 are coupled together through a bus system 505. It can be understood that the bus system 505 is configured to implement connection and communication between these components. In addition to a data bus, the bus system 505 further includes a power bus, a control bus, and a status signal bus. However, for clarity of description, various buses are denoted as the bus system 505 in FIG. 5.

The user interface 503 may include a display, a keyboard, a pointing device (for example, a mouse or a trackball (trackball)), a touch panel, a touchscreen, or the like.

It can be understood that the memory 502 in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 502 in the system and method described in the embodiments of the present invention is intended to include but is not limited to these and any other suitable types of memories.

In some embodiments, the memory 502 stores the following elements: executable modules or data structures, or a subset thereof, or an extended set thereof: an operating system 5021 and an application program 5022.

The operating system 5021 includes various system programs, such as a framework layer, a core library layer, and a driver layer, for implementing various basic services and processing hardware-based tasks. The application program 5022 includes various application programs, such as a media player (Media Player) and a browser (Browser), which are used to implement various application services. A program for implementing the method in this embodiment of the present invention may be included in the application program 5022.

In this embodiment of the present invention, the terminal device 500 further includes a computer program that is stored in the memory 502 and capable of running on the processor 501. When the computer program is executed by the processor 501, the following steps are implemented: obtaining a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; generating a CSI report based on the CSI report configuration and the one or more CSI measurement resource groups; and reporting the CSI report.

The method disclosed in the foregoing embodiments of the present invention may be applied to the processor 501 or implemented by the processor 501. The processor 501 may be an integrated circuit chip with a signal processing capability. During implementation, the steps of the foregoing method may be completed by a hardware integrated logic circuit in the processor 501 or instructions in the form of software. The processor 501 may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in the embodiments of the present invention. The general-purpose processor may be a microprocessor, or the processor may also be any conventional processor or the like. Steps of the methods disclosed with reference to the embodiments of the present invention may be directly performed and completed by using a hardware decoding processor, or may be performed and completed by using a combination of hardware and a software module in a decoding processor. The software module may be located in a computer-readable storage medium that is mature in the art, such as a random access memory, a flash memory, a read-only memory, a programmable read-only memory, or an electrically erasable programmable memory, or a register. The computer-readable storage medium is located in the memory 502, and the processor 501 fetches information in the memory 502, and completes the steps of the foregoing method in combination with its hardware. Specifically, the computer-readable storage medium stores a computer program, where when the computer program is executed by the processor 501, the steps of the CSI report feedback method embodiment are implemented.

It can be understood that the embodiments described in the embodiments of the present invention may be implemented by hardware, software, firmware, middleware, microcode, or a combination thereof. For hardware implementation, the processing unit may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field programmable gate array (Field Programmable Gate Array, FPGA), a general-purpose processor, a controller, a microcontroller, a microprocessor, another electronic unit for performing the functions described in the present invention, or a combination thereof.

For software implementation, the technologies described in the embodiments of the present invention may be implemented by modules (for example, processes or functions) that perform the functions described in the embodiments of the present invention. Software code may be stored in the memory and executed by the processor. The memory may be implemented in or outside the processor.

Optionally, one CSI measurement resource includes one channel measurement resource, and the channel measurement resource includes a channel state information-reference signal CSI-RS resource or a synchronization signal block SSB resource; or one CSI measurement resource includes one interference measurement resource, and the interference measurement resource includes a channel state information-interference measurement CSI-IM resource; or one CSI measurement resource includes one channel measurement resource or one interference measurement resource, and the channel measurement resource and the interference measurement resource include part or all of CSI-RS ports in a CSI-RS resource.

The plurality of CSI measurement resource groups are configured by using one CSI resource configuration associated with the CSI report configuration; or the plurality of CSI measurement resource groups are respectively configured by using a CSI resource configuration associated with the CSI report configuration and a CSI resource configuration associated with another CSI report configuration, and an association relationship between the CSI report configuration and the another CSI report configuration is configured or indicated by a network device.

The generating a CSI report based on the CSI report configuration and the one or more CSI measurement resource groups includes: selecting N CSI measurement resources from the one or more CSI measurement resource groups, where N is an integer greater than 0 and less than or equal to M, and M is a quantity of the plurality of CSI measurement resource groups; and generating the CSI report based on the N CSI measurement resources.

The CSI report includes at least one of first CSI and second CSI. The first CSI is CSI obtained based on one CSI measurement resource, and the CSI measurement resource belongs to one of the one or more CSI measurement resource groups. The second CSI is CSI obtained based on the N CSI measurement resources, where N is greater than 1, and the N CSI measurement resources belong to the plurality of CSI measurement resource groups, or the N CSI measurement resources respectively belong to N CSI measurement resource groups.

A transmission mode corresponding to the second CSI is any one of the following: non-coherent joint transmission NCJT, single frequency network SFN, space division multiplexing SDM, frequency division multiplexing FDM, and time division multiplexing TDM, where the transmission mode corresponding to the second CSI is indicated by the network device or pre-agreed upon by the network device and the terminal device.

Before the reporting the CSI report, the method further includes: receiving indication information from the network device, where the indication information is used to indicate the terminal device to choose to report the first CSI or the second CSI; or the indication information is used to indicate a type of CSI included in the CSI report, and the CSI type includes the first CSI, the second CSI, or both the first CSI and the second CSI.

In the case that the indication information is used to indicate the terminal device to choose to report the first CSI or the second CSI, the CSI report includes CSI measurement resource information and CSI measurement resource indication information, where the CSI measurement resource information is used to indicate the N CSI measurement resources, the CSI measurement resource indication information is used to indicate P CSI measurement resources corresponding to the first CSI or the second CSI, the P CSI measurement resources belong to the N CSI measurement resources, P is an integer greater than or equal to 1 and less than or equal to N, and N is an integer greater than or equal to 2. When P is equal to 1, the CSI report includes the first CSI; or when P is greater than 1, the CSI report includes the second CSI.

In the case that the indication information is used to indicate that the type of the CSI included in the CSI report is the first CSI, the CSI report includes CSI measurement resource information, where the CSI measurement resource information is used to indicate one CSI measurement resource, and the first CSI corresponds to the CSI measurement resource; or the CSI report includes CSI measurement resource information and CSI measurement resource indication information, where the CSI measurement resource information is used to indicate the N CSI measurement resources, the CSI measurement resource indication information is used to indicate one CSI measurement resource corresponding to the first CSI, and the CSI measurement resource belongs to the N CSI measurement resources.

In the case that the indication information is used to indicate that the type of the CSI included in the CSI report is the second CSI, the CSI report includes CSI measurement resource information, where the CSI measurement resource information is used to indicate the N CSI measurement resources, and the second CSI corresponds to the N CSI measurement resources; or the CSI report includes CSI measurement resource information and CSI measurement resource indication information, where the CSI measurement resource information is used to indicate the N CSI measurement resources, the CSI measurement resource indication information is used to indicate Q CSI measurement resources corresponding to the second CSI, the Q CSI measurement resources belong to the N CSI measurement resources, Q is an integer greater than 1 and less than or equal to N, and N is an integer greater than or equal to 2.

In the case that the indication information is used to indicate that the type of the CSI included in the CSI report is the first CSI and the second CSI, the CSI report includes CSI measurement resource information and CSI measurement resource indication information, where the CSI measurement resource information is used to indicate the N CSI measurement resources, the second CSI corresponds to the N CSI measurement resources, the CSI measurement resource indication information is used to indicate one CSI measurement resource corresponding to the first CSI, and the CSI measurement resource belongs to the N CSI measurement resources.

Alternatively, the CSI report includes the CSI measurement resource information, first CSI measurement resource indication information, and second CSI measurement resource indication information, where the first CSI measurement resource indication information is used to indicate one CSI measurement resource corresponding to the first CSI, the second CSI measurement resource indication information is used to indicate P CSI measurement resources corresponding to the second CSI, the CSI measurement resource and the P CSI measurement resources belong to the N CSI measurement resources, and P is an integer greater than 1 and less than or equal to N.

Alternatively, the CSI report includes first CSI measurement resource information, second CSI measurement resource information, first CSI measurement resource indication information, and second CSI measurement resource indication information, where the first CSI measurement resource information is used to indicate N1 CSI measurement resources, the second CSI measurement resource information is used to indicate N2 CSI measurement resources, the first CSI measurement resource indication information is used to indicate one CSI measurement resource corresponding to the first CSI, the second CSI measurement resource indication information is used to indicate B CSI measurement resources corresponding to the second CSI, the CSI measurement resource belongs to the N1 CSI measurement resources, the B CSI measurement resources belong to the N2 CSI measurement resources, the N1 CSI measurement resources and the N2 CSI measurement resources belong to the N CSI measurement resources, a union of the N1 CSI measurement resources and the N2 CSI measurement resources is the N CSI measurement resources, N1 is an integer greater than or equal to 1, N2 is an integer greater than or equal to 2, and B is an integer greater than 1 and less than or equal to N2.

Alternatively, the CSI report includes first CSI measurement resource information, second CSI measurement resource information, and CSI measurement resource indication information, where the first CSI measurement resource information is used to indicate one CSI measurement resource corresponding to the first CSI, the second CSI measurement resource information is used to indicate N3 CSI measurement resources, the CSI measurement resource indication information is used to indicate B CSI measurement resources corresponding to the second CSI, N3 is an integer greater than 1, the B CSI measurement resources belong to the N3 CSI measurement resources, a union of the one CSI measurement resource and the N3 CSI measurement resources is the N CSI measurement resources, and B is an integer greater than 1 and less than or equal to N3.

The second CSI includes L rank indicators RIs and P pieces of CSI, one of the P pieces of CSI is part of CSI obtained based on P CSI measurement resources, the part of the CSI corresponds to one of the P CSI measurement resources, L is an integer greater than or equal to 1 and less than or equal to N, and P is an integer greater than 1 and less than or equal to N. When L is equal to 1, an RI corresponding to the P pieces of CSI is one RI, or a sum of P RIs corresponding to the P pieces of CSI is equal to the one RI; or when L is equal to P, the P pieces of CSI each correspond to one RI. The one piece of CSI includes at least one of the following: wideband CSI, where the wideband CSI includes at least one of a wideband precoding matrix indicator PMI and a wideband channel quality indicator CQI; and subband CSI, where the subband CSI includes at least one of a subband PMI and a subband CQI, the subband PMI includes a wideband PMI part and a K-subband PMI part, and the subband CQI includes a wideband CQI part and a K-subband CQI part.

The CSI report includes a piece of CSI measurement resource information or specific CSI measurement resource information, or does not include CSI measurement resource information. The specific CSI measurement resource information is used to indicate that the CSI report does not include target CSI. In the case that the CSI report includes one piece of CSI measurement resource information or does not include CSI measurement resource information, the CSI report further indicates whether the target CSI is included, and the target CSI includes CSI corresponding to the one piece of CSI measurement resource information or CSI of a CSI measurement resource group corresponding to a CSI resource configuration associated with the CSI report configuration.

The CSI measurement resource information includes CSI measurement resource group number information and/or number information of a CSI measurement resource in a CSI measurement resource group; or the CSI measurement resource information includes a CSI measurement resource or a CSI measurement resource number, and the CSI measurement resource or the CSI measurement resource number is used to determine the CSI measurement resource group number information and/or the number information of the CSI measurement resource in the CSI measurement resource group.

When the CSI measurement resource is a CSI-RS resource or a CSI-IM resource, the N pieces of CSI measurement resource information are determined based on a CSI-RS resource indicator CRI in the CSI report.

The terminal device 500 is capable of implementing the processes implemented by the terminal device in the foregoing embodiments. To avoid repetition, details are not described again herein.

In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

FIG. 6 is a structural diagram of a network device according to an embodiment of the present invention. As shown in FIG. 6, the network device 600 includes a processor 601, a transceiver 602, a memory 603, a user interface 604, and a bus interface. In this embodiment of the present invention, the network device 600 further includes a computer program that is stored in the memory 603 and capable of running on the processor 601. When the computer program is executed by the processor 601, the following steps are implemented:
transmitting, to a terminal device, a CSI report configuration and one or more CSI measurement resource groups corresponding to the CSI report configuration, where each CSI measurement resource group includes one or more CSI measurement resources, each CSI measurement resource group includes a channel measurement resource group and/or an interference measurement resource group, and each CSI measurement resource includes a channel measurement resource and/or an interference measurement resource; and receiving a CSI report from the terminal device, where the CSI report is determined by the terminal device based on the CSI report configuration and the one or more CSI measurement resource groups.

In FIG. 6, a bus architecture may include any quantity of interconnected buses and bridges, and specifically connect various circuits of one or more processors represented by the processor 601 and a memory represented by the memory 603. The bus architecture may further interconnect various other circuits such as a peripheral device, a voltage regulator, and a power management circuit. These are all well known in the art, and therefore are not further described in this specification. The bus interface provides an interface. The transceiver 602 may be a plurality of components, including a transmitter and a receiver, and provides units for communicating with a variety of other apparatuses on a transmission medium. Depending on different user equipments, the user interface 604 may also be an interface capable of externally or internally connecting to a required device, and the connected device includes but is not limited to a keypad, a display, a speaker, a microphone, a joystick, and the like.

The processor 601 is responsible for management of the bus architecture and general processing, and the memory 603 may store data for use by the processor 601 when the processor 601 performs an operation.

In this embodiment of the present invention, the network device configures CSI measurement resources corresponding to the CSI report configuration as the one or more CSI measurement resource groups, so that different TRPs can correspond to different CSI measurement resource groups. In this way, when reporting the CSI report, the terminal device can effectively select, based on the CSI report configuration and the corresponding one or more CSI measurement resource groups, one or more TRPs for CSI measurement, and report the CSI report. Regarding the network device, the network device can effectively determine, based on the CSI report, one or more TRPs for resource scheduling.

Optionally, when the computer program is executed by the processor 603, the following step may be further implemented: when the CSI report configuration and the one or more CSI measurement resource groups corresponding to the CSI report configuration are transmitted to the terminal device, in the case that the plurality of CSI measurement resource groups are respectively configured by using a CSI resource configuration associated with the CSI report configuration and a CSI resource configuration associated with another CSI report configuration, configuring or indicating an association relationship between the CSI report configuration and the another CSI report configuration.

Before the CSI report is received from the terminal device, indication information is transmitted to the terminal device, where the indication information is used to indicate the terminal device to choose to report first CSI or second CSI; or the indication information is used to indicate a type of CSI included in the CSI report, and the CSI type includes the first CSI, the second CSI, or both the first CSI and the second CSI.

The CSI report includes at least one of CSI measurement resource information and CSI measurement resource indication information, where the CSI measurement resource information is used to indicate N CSI measurement resources, and the CSI measurement resource indication information is used to indicate a CSI measurement resource corresponding to the first CSI or the second CSI. After the CSI report is received from the terminal device, one or more transmission reception points TRPs are determined based on the at least one of the CSI measurement resource information and the CSI measurement resource indication information; and resource scheduling is performed for the terminal device based on the one or more TRPs.

Optionally, an embodiment of the present invention further provides a mobile terminal, including a processor 110, a memory 109, and a computer program that is stored in the memory 109 and capable of running on the processor 110. When the computer program is executed by the processor 110, the processes of the CSI report feedback method embodiment are implemented, with the same technical effects achieved. To avoid repetition, details are not described herein again.

An embodiment of the present invention further provides a computer-readable storage medium, where the computer-readable storage medium stores a computer program. When the computer program is executed by a processor, the processes of the CSI report feedback method embodiment are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, or certainly may be alternatively implemented by using hardware. However, in most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The embodiments of the present invention are described above with reference to the accompanying drawings, but the present invention is not limited to the foregoing implementations. The foregoing embodiments are merely illustrative rather than restrictive. Inspired by the present invention, a person of ordinary skill in the art can still derive many variations without departing from the essence of the present invention and the protection scope of the claims. All these variations shall fall within the protection of the present invention.

## Claims

1. A channel state information CSI report feedback method, applied to a terminal device and comprising:
obtaining a CSI report configuration and one or more CSI measurement resource groups corresponding to the CSI report configuration, wherein each CSI measurement resource group comprises one or more CSI measurement resources, each CSI measurement resource group comprises a channel measurement resource group and/or an interference measurement resource group, and each CSI measurement resource comprises a channel measurement resource and/or an interference measurement resource;
generating a CSI report based on the CSI report configuration and the one or more CSI measurement resource groups; and
reporting the CSI report.

2. The method according to claim 1, wherein
one CSI measurement resource comprises one channel measurement resource, and the channel measurement resource comprises a channel state information-reference signal CSI-RS resource or a synchronization signal block SSB resource; or
one CSI measurement resource comprises one interference measurement resource, and the interference measurement resource comprises a channel state information-interference measurement CSI-IM resource; or
one CSI measurement resource comprises one channel measurement resource or one interference measurement resource, and the channel measurement resource and the interference measurement resource comprise part or all of CSI-RS ports in a CSI-RS resource.

3. The method according to claim 2, wherein
the plurality of CSI measurement resource groups are configured by using one CSI resource configuration associated with the CSI report configuration; or
the plurality of CSI measurement resource groups are respectively configured by using a CSI resource configuration associated with the CSI report configuration and a CSI resource configuration associated with another CSI report configuration, and an association relationship between the CSI report configuration and the another CSI report configuration is configured or indicated by a network device.

4. The method according to claim 1, wherein the generating a CSI report based on the CSI report configuration and the one or more CSI measurement resource groups comprises:
selecting N CSI measurement resources from the one or more CSI measurement resource groups, wherein N is an integer greater than 0 and less than or equal to M, and M is a quantity of the plurality of CSI measurement resource groups; and
generating the CSI report based on the N CSI measurement resources.

5. The method according to claim 4, wherein the CSI report comprises at least one of first CSI and second CSI;
the first CSI is CSI obtained based on one CSI measurement resource, and the CSI measurement resource belongs to one of the one or more CSI measurement resource groups; and
the second CSI is CSI obtained based on the N CSI measurement resources, wherein N is greater than 1, and the N CSI measurement resources belong to the plurality of CSI measurement resource groups, or the N CSI measurement resources respectively belong to N CSI measurement resource groups.

6. The method according to claim 5, wherein
a transmission mode corresponding to the second CSI is any one of the following: non-coherent joint transmission NCJT, single frequency network SFN, space division multiplexing SDM, frequency division multiplexing FDM, and time division multiplexing TDM; and
the transmission mode corresponding to the second CSI is indicated by a network device or pre-agreed upon by the network device and the terminal device.

7. The method according to claim 5, wherein before the reporting the CSI report, the method further comprises:
receiving indication information from a network device, wherein the indication information is used to indicate the terminal device to choose to report the first CSI or the second CSI; or the indication information is used to indicate a type of CSI comprised in the CSI report, and the CSI type comprises the first CSI, the second CSI, or both the first CSI and the second CSI.

8. The method according to claim 7, wherein in the case that the indication information is used to indicate the terminal device to choose to report the first CSI or the second CSI:
the CSI report comprises CSI measurement resource information and CSI measurement resource indication information, wherein the CSI measurement resource information is used to indicate the N CSI measurement resources, the CSI measurement resource indication information is used to indicate P CSI measurement resources corresponding to the first CSI or the second CSI, the P CSI measurement resources belong to the N CSI measurement resources, P is an integer greater than or equal to 1 and less than or equal to N, and N is an integer greater than or equal to 2; and
when P is equal to 1, the CSI report comprises the first CSI; or when P is greater than 1, the CSI report comprises the second CSI.

9. The method according to claim 7, wherein in the case that the indication information is used to indicate that the type of the CSI comprised in the CSI report is the first CSI:
the CSI report comprises CSI measurement resource information, wherein the CSI measurement resource information is used to indicate one CSI measurement resource, and the first CSI corresponds to the CSI measurement resource; or
the CSI report comprises CSI measurement resource information and CSI measurement resource indication information, wherein the CSI measurement resource information is used to indicate the N CSI measurement resources, the CSI measurement resource indication information is used to indicate one CSI measurement resource corresponding to the first CSI, and the CSI measurement resource belongs to the N CSI measurement resources.

10. The method according to claim 7, wherein in the case that the indication information is used to indicate that the type of the CSI comprised in the CSI report is the second CSI:
the CSI report comprises CSI measurement resource information, wherein the CSI measurement resource information is used to indicate the N CSI measurement resources, and the second CSI corresponds to the N CSI measurement resources; or
the CSI report comprises CSI measurement resource information and CSI measurement resource indication information, wherein the CSI measurement resource information is used to indicate the N CSI measurement resources, the CSI measurement resource indication information is used to indicate Q CSI measurement resources corresponding to the second CSI, the Q CSI measurement resources belong to the N CSI measurement resources, Q is an integer greater than 1 and less than or equal to N, and N is an integer greater than or equal to 2.

11. The method according to claim 7, wherein in the case that the indication information is used to indicate that the type of the CSI comprised in the CSI report is the first CSI and the second CSI:
the CSI report comprises CSI measurement resource information and CSI measurement resource indication information, wherein the CSI measurement resource information is used to indicate the N CSI measurement resources, the second CSI corresponds to the N CSI measurement resources, the CSI measurement resource indication information is used to indicate one CSI measurement resource corresponding to the first CSI, and the CSI measurement resource belongs to the N CSI measurement resources;
or
the CSI report comprises the CSI measurement resource information, first CSI measurement resource indication information, and second CSI measurement resource indication information, wherein the first CSI measurement resource indication information is used to indicate one CSI measurement resource corresponding to the first CSI, the second CSI measurement resource indication information is used to indicate P CSI measurement resources corresponding to the second CSI, the CSI measurement resource and the P CSI measurement resources belong to the N CSI measurement resources, and P is an integer greater than 1 and less than or equal to N;
or
the CSI report comprises first CSI measurement resource information, second CSI measurement resource information, first CSI measurement resource indication information, and second CSI measurement resource indication information, wherein the first CSI measurement resource information is used to indicate N1 CSI measurement resources, the second CSI measurement resource information is used to indicate N2 CSI measurement resources, the first CSI measurement resource indication information is used to indicate one CSI measurement resource corresponding to the first CSI, the second CSI measurement resource indication information is used to indicate B CSI measurement resources corresponding to the second CSI, the CSI measurement resource belongs to the N1 CSI measurement resources, the B CSI measurement resources belong to the N2 CSI measurement resources, the N1 CSI measurement resources and the N2 CSI measurement resources belong to the N CSI measurement resources, a union of the N1 CSI measurement resources and the N2 CSI measurement resources is the N CSI measurement resources, N1 is an integer greater than or equal to 1, N2 is an integer greater than or equal to 2, and B is an integer greater than 1 and less than or equal to N2;
or
the CSI report comprises first CSI measurement resource information, second CSI measurement resource information, and CSI measurement resource indication information, wherein the first CSI measurement resource information is used to indicate one CSI measurement resource corresponding to the first CSI, the second CSI measurement resource information is used to indicate N3 CSI measurement resources, the CSI measurement resource indication information is used to indicate B CSI measurement resources corresponding to the second CSI, N3 is an integer greater than 1, the B CSI measurement resources belong to the N3 CSI measurement resources, a union of the one CSI measurement resource and the N3 CSI measurement resources is the N CSI measurement resources, and B is an integer greater than 1 and less than or equal to N3.

12. The method according to claim 8, 10, or 11, wherein the second CSI comprises L rank indicators RIs and P pieces of CSI, one of the P pieces of CSI is part of CSI obtained based on the P CSI measurement resources, the part of the CSI corresponds to one of the P CSI measurement resources, L is an integer greater than or equal to 1 and less than or equal to N, and P is an integer greater than 1 and less than or equal to N;
when L is equal to 1, an RI corresponding to the P pieces of CSI is one RI, or a sum of P RIs corresponding to the P pieces of CSI is equal to the one RI; or when L is equal to P, the P pieces of CSI each correspond to one RI; and
the one piece of CSI comprises at least one of the following:
wideband CSI, wherein the wideband CSI comprises at least one of a wideband precoding matrix indicator PMI and a wideband channel quality indicator CQI; and
subband CSI, wherein the subband CSI comprises at least one of a subband PMI and a subband CQI, the subband PMI comprises a wideband PMI part and a K-subband PMI part, and the subband CQI comprises a wideband CQI part and a K-subband CQI part.

13. The method according to claim 4, wherein
the CSI report comprises a piece of CSI measurement resource information or specific CSI measurement resource information, or does not comprise CSI measurement resource information;
the specific CSI measurement resource information is used to indicate that the CSI report does not comprise target CSI; and
in the case that the CSI report comprises one piece of CSI measurement resource information or does not comprise CSI measurement resource information, the CSI report further indicates whether the target CSI is comprised, and the target CSI comprises CSI corresponding to the one piece of CSI measurement resource information or CSI of a CSI measurement resource group corresponding to a CSI resource configuration associated with the CSI report configuration.

14. The method according to claim 8, 9, 10, 11, or 13, wherein
the CSI measurement resource information comprises CSI measurement resource group number information and/or number information of a CSI measurement resource in a CSI measurement resource group; or
the CSI measurement resource information comprises a CSI measurement resource or a CSI measurement resource number, and the CSI measurement resource or the CSI measurement resource number is used to determine the CSI measurement resource group number information and/or the number information of the CSI measurement resource in the CSI measurement resource group.

15. The method according to claim 8, 9, 10, 11, or 13, wherein
when the CSI measurement resource is a CSI-RS resource or a CSI-IM resource, the N pieces of CSI measurement resource information are determined based on a CSI-RS resource indicator CRI in the CSI report.

16. A CSI report feedback method, applied to a network device and comprising:
transmitting, to a terminal device, a CSI report configuration and one or more CSI measurement resource groups corresponding to the CSI report configuration, wherein each CSI measurement resource group comprises one or more CSI measurement resources, each CSI measurement resource group comprises a channel measurement resource group and/or an interference measurement resource group, and each CSI measurement resource comprises a channel measurement resource and/or an interference measurement resource; and
receiving a CSI report from the terminal device, wherein the CSI report is determined by the terminal device based on the CSI report configuration and the one or more CSI measurement resource groups.

17. The method according to claim 16, wherein in a case of the transmitting, to a terminal device, a CSI report configuration and one or more CSI measurement resource groups corresponding to the CSI report configuration, the method further comprises:
in the case that the plurality of CSI measurement resource groups are respectively configured by using a CSI resource configuration associated with the CSI report configuration and a CSI resource configuration associated with another CSI report configuration, configuring or indicating an association relationship between the CSI report configuration and the another CSI report configuration.

18. The method according to claim 16, wherein before the receiving a CSI report from the terminal device, the method further comprises:
transmitting indication information to the terminal device, wherein the indication information is used to indicate the terminal device to choose to report first CSI or second CSI; or the indication information is used to indicate a type of CSI comprised in the CSI report, and the CSI type comprises the first CSI, the second CSI, or both the first CSI and the second CSI.

19. The method according to claim 18, wherein
the CSI report comprises at least one of CSI measurement resource information and CSI measurement resource indication information, wherein the CSI measurement resource information is used to indicate N CSI measurement resources, and the CSI measurement resource indication information is used to indicate a CSI measurement resource corresponding to the first CSI or the second CSI; and
after the receiving a CSI report from the terminal device, the method further comprises:
determining one or more transmission reception points TRPs based on the at least one of the CSI measurement resource information and the CSI measurement resource indication information; and
performing resource scheduling for the terminal device based on the one or more TRPs.

20. A terminal device, comprising:
an obtaining module, configured to obtain a CSI report configuration and one or more CSI measurement resource groups corresponding to the CSI report configuration, wherein each CSI measurement resource group comprises one or more CSI measurement resources, each CSI measurement resource group comprises a channel measurement resource group and/or an interference measurement resource group, and each CSI measurement resource comprises a channel measurement resource and/or an interference measurement resource;
a generation module, configured to generate a CSI report based on the CSI report configuration and the one or more CSI measurement resource groups; and
a reporting module, configured to report the CSI report.

21. A network device, comprising:
a transmitting module, configured to transmit, to a terminal device, a CSI report configuration and one or more CSI measurement resource groups corresponding to the CSI report configuration, wherein each CSI measurement resource group comprises one or more CSI measurement resources, each CSI measurement resource group comprises a channel measurement resource group and/or an interference measurement resource group, and each CSI measurement resource comprises a channel measurement resource and/or an interference measurement resource; and
a receiving module, configured to receive a CSI report from the terminal device, wherein the CSI report is determined by the terminal device based on the CSI report configuration and the one or more CSI measurement resource groups.

22. A terminal device, comprising a memory, a processor, and a computer program that is stored in the memory and capable of running on the processor, wherein when the computer program is executed by the processor, the steps of the method according to any one of claims 1 to 15 are implemented.

23. A network device, comprising a memory, a processor, and a computer program that is stored in the memory and capable of running on the processor, wherein when the computer program is executed by the processor, the steps of the method according to any one of claims 16 to 19 are implemented.

24. A computer-readable storage medium, wherein the computer-readable storage medium stores a computer program, and when the computer program is executed by a processor, the steps of the method according to any one of claims 1 to 15 are implemented, or the steps of the method according to any one of claims 16 to 19 are implemented.
